# EUROPÄISCHE PATENTSCHRIFT

(11) **EP 4 489 447 B1**
(45) Veröffentlichungstag und Bekanntmachung des Hinweises auf die Patenterteilung: **23.07.2025**
(21) Anmeldenummer: 23183331.0
(22) Anmeldetag: 04.07.2023
(51) Int. Cl.: H04W 4/10, H04B 7/185, G08G 5/22, G08G 5/26, G08G 5/56, G08G 5/72, H04W 84/08, H04B 7/15

(54) **SPRACHÜBERTRAGUNGSSYSTEM**
SPEECH TRANSMISSION SYSTEM
SYSTÈME DE COMMUNICATION VOCALE

(43) Veröffentlichungstag der Anmeldung: 08.01.2025
(73) Patentinhaber: Frequentis AG, 1100 Wien (AT)
(72) Erfinder: Prokop, Hannes, 1100 Wien (AT)
(74) Vertreter: Wildhack & Jellinek Patentanwälte GmbH

(56) Entgegenhaltungen:
- EP-A1- 2 658 173
- AT-B1- 518 561
- US-A1- 2017 337 823

## Beschreibung

Die Erfindung betrifft ein Sprachübertragungssystem umfassend eine Mehrzahl von Sende-/Empfangsanlagen, die mit einem ersten gemeinsamen Lotsenarbeitsplatz verbunden sind, gemäß Patentanspruch 1.

Aus dem Stand der Technik sind Sprachübertragungssysteme bekannt, die in der militärischen Flugsicherung bzw. bei *command and control* Anwendungen zum Einsatz kommen. Bei derartigen bekannten Systemen ist jeder Lotse bzw. Operator mit einem Lotsenarbeitsplatz ausgestattet, der über eine Eingabeeinheit und eine Push-to-Talk-Taste verfügt. Die Lotsen können dabei auf verschiedene gemeinsam genutzte Funkstationen zugreifen, um mit zivilen und militärischen Luftfahrzeugen zu kommunizieren.

Aus der US 2017/0337823 A1 ist ein Kommunikationssystem bekannt, das einen ersten, öffentlichen Kommunikationskanal und einen zweiten, sicheren Kommunikationskanal umfasst. Beispielsweise kann der Operator dabei, um ein ziviles Flugzeug zu steuern, Sprachdaten direkt an einen ersten Netzwerk-Switch des ersten öffentlichen Kommunikationskanals senden und um ein Militärflugzeug zu steuern, Sprachdaten direkt an einen zweiten Netzwerk-Switch des zweiten sicheren Kommunikationskanals senden, sodass die Sprachdaten durch ein Verschlüsselungsmodul verschlüsselt werden, bevor sie übertragen werden. Aus der AT 518561 B1 ist ein Kommunikationssystem zur Sprachkommunikation mit einer Anzahl von Arbeitsplätzen sowie einer Anzahl von Funksendeeinrichtungen und Funkempfangseinrichtungen bekannt, zwischen denen jeweils Kontrolleinheiten vorgesehen sind. Bei gleichzeitigem Vorliegen von Bediensignalen mehrerer Arbeitsplätze werden die Sprachsignale eines der Arbeitsplätze ausgewählt oder die Sprachsignale mehrerer Arbeitsplätze überlagert und das so erhaltene Sprachsignal übertragen. Aus der EP 2658173 A1 ist weiters ein Schalter zur selektiven Verbindung eines Empfängers mit einer von zwei Signalquellen bekannt.

Funkstationen, die sich zwar an verschiedenen geographischen Orten befinden, aber über denselben Funkkanal zu erreichen sind, werden logisch gruppiert, um es den Lotsen zu ermöglichen, weite geographische Gebiete bei der Funkkommunikation abzudecken. Dabei verwendet jeder Lotse zumeist mehrere dieser Funkstationen-Gruppen parallel. Der Lotse kann dabei jede der Funkstationen-Gruppen entweder nur für dem Empfang (RX) oder für Empfang und Übertragung (TX) nutzen. Diese RX/TX-Einstellung einer jeweiligen Funkstationen-Gruppe wird als *key-in mode* bezeichnet.

Abhängig vom Typ des Luftfahrzeugs und der aktuellen Situation, kann die Funkkommunikation verschlüsselt (Secure/COMSEC ON) oder unverschlüsselt (Plain/COMSEC OFF) erfolgen. Wenn eine Gruppe aus Funkstationen besteht, die verschlüsselte Kommunikation unterstützen, kann der Lotse vom Lotsenarbeitsplatz aus zwischen Plain/COMSEC OFF- und Secure/COMSEC ON-Kommunikation wechseln.

Während der *key-in mode,* den ein Lotse gewählt hat, keinen Einfluss auf die Kommunikation eines anderen Lotsen hat, der mit denselben Funkstationen bzw. Funkstationen-Gruppen kommuniziert, muss die COMSEC-Einstellung für alle Funkstationen einer Gruppe und bei allen Lotsen, die diese Funkstationen-Gruppe nutzen, konsistent sein. Daher wird die COMSEC-Einstellung vom Sprachübertragungssystem auf alle Lotsenarbeitsplätze übertragen, die aktuell einen jeweiligen Funkkanal nutzen.

Lotsen nutzen, insbesondere in militärischen Anwendungen, oft mehrere Funkstationen-Gruppen in rascher Abfolge und übertragen dabei geheime Informationen über einzelne Funkstationen-Gruppen im verschlüsselten Modus, während nicht geheim zu haltende Informationen über andere Funkstationen-Gruppen im unverschlüsselten Modus übertragen werden. Dazu sind vom Lotsen mehrere Arbeitsschritte durchführen:
Zunächst wählt der Lotse über die Eingabeeinheit des Lotsenarbeitsplatzes die gewünschte Funkstationen-Gruppe für die Übertragung und ändert den *key-in mode* dieser Funkstationen-Gruppe auf TX. Danach kann der Lotse die tatsächliche Funkübertragung beginnen, indem er die Push-to-Talk-Taste drückt. Wenn eine andere Funkstationen-Gruppe für die nächste Übertragung herangezogen werden soll, muss der Lotse den *key-in mode* der ersten Funkstationen-Gruppe zurück auf RX setzen, die nächste Funkstationen-Gruppe auf TX setzen und dann die Push-to-Talk-Taste benutzen, um die nächste Funkmeldung abzusetzen.

In Situationen, in denen der Lotse häufig zwischen Funkstationen-Gruppen im Secure bzw. Plain Modus wechseln muss, wird er durch die Vielzahl an erforderlichen Arbeitsschritten einer zusätzlichen Arbeitsbelastung ausgesetzt, wodurch die Wahrscheinlichkeit einer potentiell falschen Auswahl der Funkstationen-Gruppe, mit der kommuniziert werden soll, erhöht wird. Im Fall, dass mehrere Funkstationen-Gruppen im Secure oder Plain Modus gleichzeitig genutzt werden sollen, muss der zuvor beschriebene Arbeitsablauf für jede einzelne Funkstationen-Gruppe wiederholt werden.

Nachdem der Arbeitsablauf den Wechsel des *key-in mode* der Funkstationen-Gruppen beinhaltet, der vom Sprachübertragungssystem an alle Funkstationen der jeweiligen Funkstationen-Gruppe kommuniziert werden muss, erzeugt der Wechsel des *key-in mode* auch eine merkbare Verzögerung im Bereich weniger Sekunden, bevor der Lotse mit der Übertragung beginnen kann.

Aufgabe der Erfindung ist es daher, ein Sprachübertragungssystem zur Verfügung zu stellen, das die zuvor erwähnten Nachteile überwindet und insbesondere einen sofortigen Übertragungsbeginn ermöglicht und die Abfolge an Arbeitsschritten für den Wechsel zwischen Gruppen reduziert, sodass die Arbeitsbelastung der Lotsen reduziert wird, was das Potential für menschliches Versagen in Form z.B. der Auswahl einer falschen Funkstationen-Gruppe deutlich vermindert.

Die Erfindung löst diese Aufgabe bei einem Sprachübertragungssystem gemäß dem Oberbegriff von Patentanspruch 1 mit den kennzeichnenden Merkmalen von Patentanspruch 1.

Erfindungsgemäß ist dabei vorgesehen, dass die Steuer- und Verarbeitungseinheit dazu ausgebildet ist, bei Zuordnung mehrerer Funkstationen-Gruppen durch den Benutzer zu einer jeweiligen Push-to-Talk-Taste zu überprüfen, ob den einzelnen Funkstationen-Gruppen jeweils derselbe Kommunikationsmodus zugeordnet ist.

Durch diese Ausgestaltung eines erfindungsgemäßen Sprachübertragungssystems ist es vorteilhafterweise möglich, dass ein Lotse Funksprüche an eine oder mehrere Funkstationen-Gruppen im gewünschten verschlüsselten oder unverschlüsselten Kommunikationsmodus lediglich durch Drücken einer der zumindest zwei Push-to-Talk-Tasten starten kann. Da für die jeweilige Push-to-Talk-Taste die jeweiligen Funkstationen-Gruppen, die kontaktiert werden sollen, der jeweils gewählte Übertragungsmodus, sowie der jeweils gewählte Kommunikationsmodus hinterlegt sind, wird der Arbeitsablauf für den Lotsen wesentlich vereinfacht und somit die Fehleranfälligkeit wesentlich reduziert.

Insbesondere wird die Arbeitsbelastung des Benutzers bzw. des Lotsen dadurch verringert, dass Funkübertragungen sowohl vertraulicher, zu verschlüsselnder, als auch nicht vertraulicher, unverschlüsselter Sprechfunkmeldungen ohne zusätzliche Eingaben auf der Eingabeeinheit, sondern lediglich durch Drücken einer der konfigurierbaren Push-to-Talk-Tasten möglich ist.

Weiters wird durch die erfindungsgemäße Ausgestaltung vorteilhafterweise sichergestellt, dass bei der Zuordnung von mehreren Funkstationen-Gruppen zu den einzelnen Push-to-Talk-Tasten durch Drücken der jeweiligen Push-to-Talk-Taste nur mit Funkstationen-Gruppen kommuniziert wird, die sich im selben Kommunikationsmodus befinden und somit jeweils alle vertrauliche, zu verschlüsselnde oder alle nicht zu verschlüsselnde Informationen aussenden dürfen bzw. können.

Um ein erfindungsgemäßes Sprachübertragungssystem für mehrere Lotsen einsetzbar zu machen, kann vorgesehen sein, dass die Sende-/Empfangsanlagen mit zumindest einem weiteren gemeinsamen Lotsenarbeitsplatz verbunden sind.

Um bei einem erfindungsgemäßen Sprachübertragungssystem, das von mehreren Lotsen genutzt wird, sicherstellen zu können, dass auch an den weiteren Lotsenarbeitsplätzen Lotsen Funksprüche an eine oder mehrere Funkstationen-Gruppen im gewünschten verschlüsselten oder unverschlüsselten Kommunikationsmodus auf einfache Weise und ohne komplexe Arbeitsabfolge absetzen können, kann vorgesehen sein, dass der zumindest eine weitere Lotsenarbeitsplatz einen weiteren Lautsprecher zur Ausgabe von Sprechfunkmeldungen an einen Benutzer, ein weiteres Mikrofon zur Aufnahme von, vom Benutzer abgegebenen, Sprechfunkmeldungen, eine weitere Eingabeeinheit, sowie eine weitere Steuer- und Verarbeitungseinheit mit einem weiteren Zwischenspeicher umfasst,
- wobei über die weitere Eingabeeinheit für die einzelnen Funkstationen-Gruppen ein Empfangs-Übertragungsmodus oder ein Sende-/Empfangs-Übertragungsmodus vom Benutzer wählbar ist, und
- wobei über die weitere Eingabeeinheit für die einzelnen Funkstationen-Gruppen ein verschlüsselter Kommunikationsmodus oder ein unverschlüsselter Kommunikationsmodus vom Benutzer wählbar ist,
- wobei im weiteren Zwischenspeicher die Funkkanäle der einzelnen Funkstationen-Gruppen sowie der jeweils gewählte Übertragungsmodus hinterlegt sind, und
- wobei der weitere Lotsenarbeitsplatz eine weitere Push-to-Talk-Einheit umfasst, wobei die weitere Push-to-Talk-Einheit zumindest zwei konfigurierbare Push-to-Talk-Tasten umfasst, wobei über die weitere Eingabeeinheit jeder der Push-to-Talk-Tasten zumindest eine Funkstationen-Gruppe und ein Kommunikationsmodus vom Benutzer zuordenbar ist.

Da für die einzelnen Funkstationen-Gruppen ein Kommunikationsmodus neu gewählt werden kann, wenn sich ein neuer, weiterer Lotsenarbeitsplatz zuschaltet, kann vorgesehen sein, dass die Steuer- und Verarbeitungseinheit dazu ausgebildet ist, bei Zuschaltung eines weiteren Lotsenarbeitsplatzes bei erstmaliger Verwendung einer jeweiligen Funkstationen-Gruppe am weiteren Lotsenarbeitsplatz den aktuellen Kommunikationsmodus der betreffenden Funkstationen-Gruppe zu ermitteln, wobei insbesondere vorgesehen ist, dass die Steuer- und Verarbeitungseinheit dazu ausgebildet ist, den aktuellen Kommunikationsmodus der betreffenden Funkstationen-Gruppe für den Benutzer am weiteren Lotsenarbeitsplatz anzuzeigen.

Durch diese Ausgestaltung eines erfindungsgemäßen Sprachkommunikationssystems ist vorteilhafterweise sichergestellt, dass der neu hinzugekommene Benutzer am weiteren Arbeitsplatz stets den aktuellen Kommunikationsmodus aller Funkstationen-Gruppen kennt, sodass etwaige unnötige Änderungen des Kommunikationsmodus vermieden werden.

Da der für die einzelnen Funkstationen-Gruppen gewählte Kommunikationsmodus auch aktiv von einem Benutzer bzw. Lotsen geändert werden kann, wenn beispielsweise Probleme in der Übertragungsqualität erkannt werden, oder sich der gewählte Kommunikationsmodus durch einen Ausfall z.B. der Verschlüsselungseinrichtung einer Funkstation ändert und sich derart unzulässige Kombinationen von Funkstationen-Gruppen im verschlüsselten Kommunikationsmodus, sowie im unverschlüsselten Kommunikationsmodus auf derselben Push-to-Talk-Taste ergeben können, kann vorgesehen sein, dass die Steuer- und Verarbeitungseinheit dazu ausgebildet ist, nach der Zuordnung mehrerer Funkstationen-Gruppen einer jeweiligen Push-to-Talk-Taste in vorgegebenen Zeitabständen, insbesondere laufend, zu überprüfen, ob den einzelnen Funkstationen-Gruppen jeweils noch derselbe Kommunikationsmodus zugeordnet ist und im Fall einer Detektion einer Veränderung des Kommunikationsmodus einer Funkstationen-Gruppe, die Zuordnung der betreffenden Funkstationen-Gruppe zur jeweiligen Push-to-Talk-Taste zu beenden.

Um einen Benutzer darauf hinzuweisen, dass sich bei bestehender Zuordnung von mehreren Funkstationen-Gruppen zu derselben Push-to-Talk-Taste oder sich bei einer neu gewählten Zuordnung mehrerer Funkstationen-Gruppen zu derselben Push-to-Talk-Taste unzulässige Kombinationen von verschlüsseltem und unverschlüsseltem Kommunikationsmodus ergeben haben bzw. entstehen, kann vorgesehen sein, dass die Steuer- und Verarbeitungseinheit dazu ausgebildet ist, einen, insbesondere optischen und/oder akustischen, Warnhinweis an den Benutzer an einem Lotsenarbeitsplatz abzugeben,
- im Fall, dass bei der Zuordnung mehrerer Funkstationen-Gruppen durch einen Benutzer zu einer jeweiligen Push-to-Talk-Taste einer der Funkstationen-Gruppen nicht derselbe Kommunikationsmodus zugeordnet ist und/oder
- im Fall, dass die Zuordnung einer Funkstationen-Gruppe zur Push-to-Talk-Taste beendet ist und/oder
- im Fall einer Änderung des Kommunikationsmodus einer der Funkstationen-Gruppen (CG) durch den Benutzer eines weiteren Lotsenarbeitsplatzes, d.h. im Fall, dass der Kommunikationsmodus einer der am betreffenden Lotsenarbeitsplatz verwendeten Funkstationen-Gruppen durch den Benutzer eines weiteren, anderen Lotsenarbeitsplatzes geändert wird.

Besonders kompakt, übersichtlich und einfach für den Benutzer zu bedienen kann ein Lotsenarbeitsplatz eines erfindungsgemäßen Sprachübertragungssystems ausgestaltet sein, wenn der Lautsprecher und/oder das Mikrofon und/oder die Push-to-Talk-Einheit in bzw. an einem Headset angeordnet sind bzw. von diesem umfasst sind.

Um eine Verzögerung bei der Übertragung von Sprechfunkmeldungen besonders effizient zu vermeiden, kann vorgesehen sein, dass über die Eingabeeinheit jedem der Push-to-Talk-Tasten zumindest eine Funkstationen-Gruppe, für die der Sende-/Empfangs-Übertragungsmodus gewählt ist, vom Benutzer zuordenbar ist. Auf diese Weise ist vorteilhaft sichergestellt, dass sich die zumindest eine Funkstationen-Gruppe bereits im Sende-/Empfangsmodus befindet, sodass der Benutzer seine Übertragung sofort beginnen kann.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:
Fig. 1 ein Ausführungsbeispiel eines Lotsenarbeitsplatzes eines erfindungsgemäßen Sprachkommunikationssystems,
Fig. 2 ein schematisches Beispiel einer Funkstationen-Gruppe, die Funksignale von den Sende-/Empfangsanlagen des Sprachkommunikationssystems, die mit zwei Lotsenarbeitsplätzen verbunden sind, empfangen bzw. an diese senden.

Im folgenden Ausführungsbeispiel wird die operationelle Verwendung eines erfindungsgemäßen Sprachübertragungssystems VCS näher erläutert, dessen Lotsenarbeitsplätze CWP1, CWP2 (engl. Controller Working Position) jeweils mit einer Push-to-Talk-Einheit 7 mit zwei konfigurierbaren Push-to-Talk-Tasten ausgestattet sind.

### Ausgangssituation

Zwei militärische Fluglotsen führen gemeinsam eine Mission durch und benötigen dafür zuverlässige Kommunikation per Funk mit eigenen militärischen Luftfahrzeugen, mit militärischen Luftfahrzeugen aus Nachbarstaaten sowie mit zivilen Luftfahrzeugen, die sich in räumlicher Nähe zu den eigenen Kräften bzw. militärischen Luftfahrzeugen befinden.

Zur Sicherstellung einer erhöhten Ausfallssicherheit befinden sich die beiden Fluglotsen bzw. Lotsen in räumlich entfernten Gebäuden und verwenden ein erfindungsgemäßes Sprachübertragungssystem VCS sowohl für die Kommunikation untereinander per Telefonverbindung als auch für die Kommunikation mit den Flugzeugen per Sprechfunk. Jeder Lotse verfügt über einen Lotsenarbeitsplatz CWP1, CWP2.

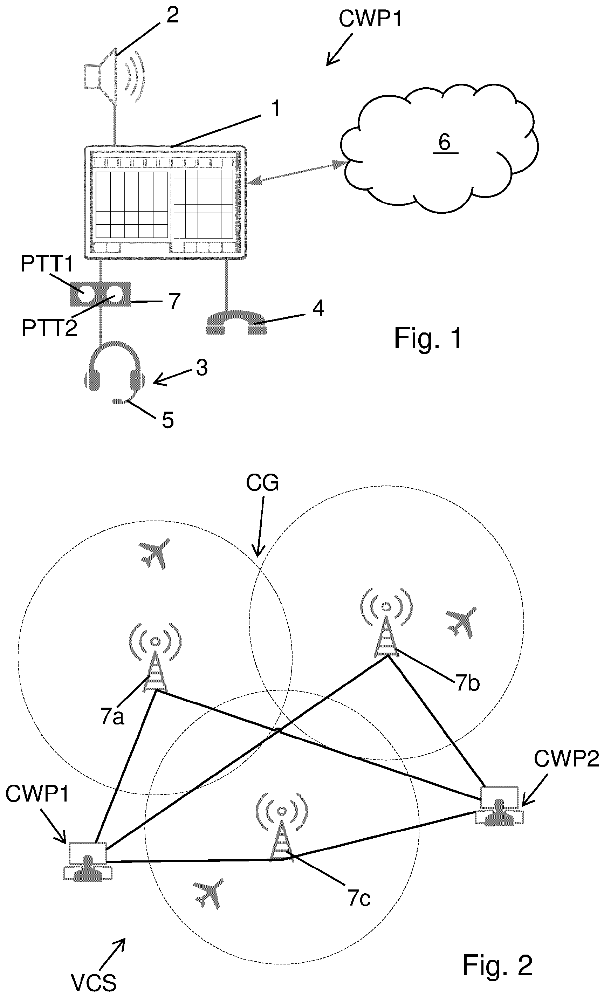

Ein erster derartiger Lotsenarbeitsplatz CWP1 ist schematisch in Fig. 1 dargestellt und verfügt über eine Eingabeeinheit 1, beispielsweise einen Touchscreen. An den Lotsenarbeitsplatz CWP1 sind im Ausführungsbeispiel in Fig. 1 mehrere Audiogeräte, nämlich ein Headset 3, ein Telefonhörer 4 und ein Lautsprecher 2 angeschlossen (siehe Fig. 1). Die beiden Kommunikationsarten Funk und Telefonie werden dabei durch das Sprachübertragungssystem VCS zur Verfügung gestellt und können über die gleichen Audiogeräte erfolgen. Über den Lautsprecher 2 werden Sprechfunkmeldungen an den Benutzer, d.h. den Lotsen, ausgegeben und über ein Mikrofon 5 vom Lotsen abgegebene Sprechfunkmeldungen aufgenommen.

Das Sprachübertragungssystem VCS umfasst mehrere Sende-/Empfangsanlagen zum Senden bzw. Empfangen von Funksignalen an bzw. von einer Mehrzahl von Funkstationen-Gruppen CG. Eine derartige Funkstationen-Gruppe CG umfasst jeweils eine Mehrzahl von geographisch verteilten Funkstationen 7a, 7b, 7c, die Sprechfunkmeldungen jeweils auf demselben Funkkanal senden bzw. empfangen können. Die Sende-/Empfangsanlagen sind mit den Lotsenarbeitsplätzen CWP1, CWP2 verbunden. Diese Verbindung ist über ein Netzwerk 6 realisiert, an welches sämtliche Lotsenarbeitsplätze sowie Sende-/Empfangsanlagen des Sprachübertragungssystems VCS angebunden sind. Das Netzwerk ermöglicht eine Übertragung von digitalen Sprachdaten, Steuerkommandos und Statusinformationen.

Mittels der Eingabeeinheit 1 kann jeder Lotse für die einzelnen Funkstationen-Gruppen CG einen Empfangs-Übertragungsmodus RX oder ein Sende-/Empfangs-Übertragungsmodus TX eingeben bzw. wählen. Weiters kann jeder Lotse mittels der Eingabeeinheit 1 für die einzelnen Funkstationen-Gruppen CG einen verschlüsselten Kommunikationsmodus S oder einen unverschlüsselten Kommunikationsmodus P wählen.

Um diese für die einzelnen Funkstationen-Gruppen CG gewählten Einstellungen zu hinterlegen, umfasst der erste Lotsenarbeitsplatz CWP1 eine Steuer- und Verarbeitungseinheit mit einem Zwischenspeicher, in dem nicht nur der jeweils gewählte Übertragungsmodus für eine jeweilige Funkstationen-Gruppe CG, sondern auch der Funkkanal, über den die jeweilige Funkstationen-Gruppe CG kommuniziert, hinterlegt werden kann.

Der erste Lotsenarbeitsplatz CWP1 weist weiters eine Push-to-Talk-Einheit 7 auf, die im Ausführungsbeispiel im Verbindungskabel zwischen Headset 3 und Lotsenarbeitsplatz CWP 1 untergebracht ist. Die Push-to-Talk-Einheit 7 besitzt im Ausführungsbeispiel zwei konfigurierbare Push-to-Talk-Tasten. Jeder der Push-to-Talk-Tasten PTT1, PTT2 kann der Lotse mittels der Eingabeeinheit 1 eine oder mehrere Funkstationen-Gruppen CG und einen Kommunikationsmodus zuweisen. Die Informationen darüber, welche Funkstationen-Gruppen CG mit welchem Kommunikationsmodus einer jeweiligen Push-to-Talk-Taste PTT1, PTT2 vom Lotsen zugeordnet wurden, können vorteilhafterweise ebenfalls im Zwischenspeicher hinterlegt sein.

Der weitere Lotsenarbeitsplatz CWP2 des weiteren Lotsen, der in Fig. 2 dargestellt ist, ist im Ausführungsbeispiel gleich ausgestattet, wie der erste Lotsenarbeitsplatz CWP1, weist also einen weiteren Lautsprecher, ein weiteres Mikrofon, eine weitere Eingabeeinheit, eine weitere Steuer- und Verarbeitungseinheit mit einem weiteren Zwischenspeicher, eine weitere Push-to-Talk-Einheit, etc. auf.

Zur Durchführung ihres Auftrags wurden den beiden Fluglotsen in einer vorangehenden Planungsphase die Überdeckungsfrequenzen bzw. Funkkanäle V-01, U-02, U-03 und U-04 zur Verwendung zugewiesen, über die vier verschiedene Funkstationen-Gruppen CG erreichbar sind. Während Funkkanal V-01 im zivil genutzten Teil des VHF-Bandes betrieben wird, handelt es sich bei den Funkkanälen U-02, U-03 und U-04 um Funkkanäle von Funkstationen-Gruppen CG im militärisch genutzten Teil des UHF-Bandes. Alle Funkstationen-Gruppen CG im Ausführungsbeispiel bestehen aus jeweils drei Funkgeräten, die sich an drei verschiedenen Funkstandorten befinden. Diese Funkstandorte sind so auf das Operationsgebiet verteilt, dass jeder Punkt von zumindest einem der drei Standorte aus erreicht werden kann (siehe Fig. 2).

Alle Funkgeräte innerhalb einer Funkstationen-Gruppe CG empfangen und senden auf der gleichen Funkfrequenz bzw. dem gleichen Funkkanal. Jeder der Fluglotsen hat die Möglichkeit, eines oder mehrere der Funkgeräte einer Funkstationen-Gruppe CG für den Empfang auszuwählen. Wenn mehrere Funkgeräte der gleichen Funkstationen-Gruppe CG für den Empfang gewählt sind, bietet ein erfindungsgemäßes Sprachübertragungssystem VCS die Möglichkeit, automatisch das Audiosignal jenes Funkgeräts zum Lotsen durchzuschalten, welches aktuell die beste Signalqualität des empfangenen Signals aufweist. Alle Flugzeuge, die auf einer Funkstationen-Gruppe CG erreicht werden sollen, haben ihr Funkgerät ebenfalls auf die jeweilige Frequenz eingestellt.

Die zivile Funkstationen-Gruppe CG mit dem Funkkanal V-01 ist sowohl dem zivilen, als auch dem militärischen Flugverkehr bekannt und wird zur Koordination verwendet. Es kann davon ausgegangen werden, dass alle Flugzeuge, die sich im Operationsgebiet befinden, auf dieser Funkfrequenz erreicht werden können.

Die Funkstationen-Gruppen CG mit den Funkkanälen U-02, U-03 und U-04 wurden den eigenen Piloten im Zuge der Einsatzbesprechung mitgeteilt und dienen zur Weitergabe einsatzrelevanter Informationen, die potenziell der Geheimhaltung unterliegen. Um die Vertraulichkeit der darüber ausgetauschten Informationen zu gewährleisten, wird ein verschlüsselter Kommunikationsmodus S mit einem Verschlüsselungsverfahren verwendet, welches durch Schlüsselgeräte realisiert wird.

Die Schlüsselgeräte wandeln ein ausgehendes Sprachsignal vor der eigentlichen Übertragung durch das Funkgerät in ein verschlüsseltes Sprachsignal um, welches beim Empfänger nur unter Verwendung eines gleichartigen Schlüsselgerätes mit identem Schlüssel wieder entschlüsselt werden kann. Für Empfänger, die nicht über das entsprechende Schlüsselgerät sowie den passenden Schlüssel verfügen, bleibt eine abgefangene Übertragung dadurch unverständlich.

Ein solches Schlüsselgerät ist bei jedem der Funkgeräte der Funkstationen-Gruppen CG mit den Funkkanälen U-02, U-03 und U-04 auf dem Boden, sowie an Bord der militärischen Flugzeuge vorhanden. Im Vorfeld wurden für die Funkkanäle U-02 und U-04 Schlüssel erzeugt und sowohl am Boden, als auch in den Flugzeugen in die Schlüsselgeräte geladen.

Die Funkstationen-Gruppe CG mit dem Funkkanal U-03 verfügt zwar über Schlüsselgeräte, wird für die beschriebene, aktuelle Mission aber unverschlüsselt, d.h. im unverschlüsselten Kommunikationsmodus P betrieben. Während die Funkkanäle U-02 und U-03 nur von eigenen Flugzeugen verwendet werden, ist die Funkstationen-Gruppe CG mit dem Funkkanal U-04 auch militärischen Flugzeugen aus einem befreundeten Nachbarland bekannt und kann zur Koordination mit diesen verwendet werden.

Es ergibt sich daher die folgende Konfiguration der Funkstationen-Gruppen CG:

| Funkkanal | Frequenzband | Nutzung | Verschlüsselung möglich | Verschlüsselung aktiv | Push-to-Talk Taste |
|---|---|---|---|---|---|
| V-01 | VHF | Zivil | Nein | Nein | PTT 1 |
| U-02 | UHF | Militärisch national | Ja | Ja | PTT 2 |
| U-03 | UHF | Militärisch national | Ja | Nein | PTT 1 |
| U-04 | UHF | Militärisch international | Ja | Ja | PTT 2 |

### Vorbereitung

In der Vorbereitung für die Mission weisen beide Fluglotsen die Funkstationen-Gruppen CG mit den Funkkanälen V-01 sowie U-03, die sich im Sende-/Empfangsmodus TX befinden, auf die Push-to-Talk-Taste PTT 1 zu. Damit können die beiden unverschlüsselten Funkstationen-Gruppen CG, d.h. die Funkstationen-Gruppen CG, die sich im unverschlüsselten Kommunikationsmodus P befinden, gemeinsam bedient werden und die Fluglotsen können den gleichen Funkspruch sowohl im VHF-Band als auch im UHF-Band gleichzeitig senden.

Die verschlüsselten Funkstationen-Gruppen CG mit den Funkkanälen U-02 und U-04, d.h. die Funkstationen-Gruppen CG, die sich im verschlüsselten Kommunikationsmodus S, sowie im Sende-/Empfangsmodus TX befinden, werden von beiden Fluglotsen auf die Push-to-Talk-Taste PTT 2 konfiguriert.

Bei der Zuordnung bzw. Zuweisung mehrerer Funkstationen-Gruppen CG zu derselben Push-to-Talk-Taste PTT1, PTT2 durch den Lotsen überprüft die Steuer- und Verarbeitungseinheit, ob den einzelnen Funkstationen-Gruppen CG jeweils derselbe Kommunikationsmodus zugeordnet ist. Auf diese Weise wird zuverlässig vermieden, dass ein unbeabsichtigtes Aussenden von vertraulicher Sprache auf einem unverschlüsselten Funkkanal bzw. an eine oder mehrere Funkstationen-Gruppen im unverschlüsselten Kommunikationsmodus P stattfinden kann.

Beide Lotsen können im Ausführungsbeispiel durch die gewählte Zuordnung der Funkstationen-Gruppen CG zu den Push-to-Talk-Tasten PTT1, PTT2 ab jetzt ohne weitere Bedienschritte am Touchscreen des Sprachübertragungssystems VCS den Funkverkehr auf allen vier Funkstationen-Gruppen CG gleichzeitig hören. Weiters können sie wahlweise durch Drücken der Push-to-Talk-Taste PTT 1 gleichzeitig auf den beiden unverschlüsselten Funkstationen-Gruppen CG mit den Funkkanälen V-01 und U-03 senden, bzw. durch Drücken der Push-to-Talk-Taste PTT 2 auf den verschlüsselten Funkstationen-Gruppen CG mit den Funkkanälen U-02 und U-04.

Somit werden vom jeweiligen Lotsen ins Mikrofon 5 gesprochenen Meldungen nur an jene Funkstationen-Gruppen CG zur Sendung übermittelt, die der gerade gedrückten Push-to-Talk-Taste zugeordnet sind.

### Ablauf

Im Verlauf der Mission nimmt ein erster der beiden Lotsen Probleme in der Kommunikation mit einem der Flugzeuge des befreundeten Nachbarstaates über die Funkstationen-Gruppe CG mit dem Funkkanal U-04 wahr. Da er diese Probleme auf die Verschlüsselung zurückführt, schaltet er die Funkstationen-Gruppe CG mit dem Funkkanal U-04 vom verschlüsselten Kommunikationsmodus S auf den unverschlüsselten Kommunikationsmodus P um. Technisch wird diese Umschaltung vom ersten Lotsenarbeitsplatz CWP1 an alle drei Funkgeräte der betreffenden Funkstationen-Gruppe CG kommuniziert, die am Funkkanal U-04 beteiligt sind.

Jedes dieser Funkgeräte schaltet auf unverschlüsselte Kommunikation bzw. in den unverschlüsselten Kommunikationsmodus P und teilt diese Information mit allen anderen Komponenten des Sprachübertragungssystems VCS, mit denen es in Verbindung steht. Im Ausführungsbeispiel betrifft dies besonders den weiteren Lotsenarbeitsplatz CWP2 des zweiten Lotsen, der sich in einem anderen Gebäude befindet und der deshalb von den Kommunikationsproblemen und der dadurch ausgelösten Umschaltung in den unverschlüsselten Kommunikationsmodus P noch keine Kenntnis hat.

Die Software, die auf der Steuer- und Verarbeitungseinheit auf dem weiteren Lotsenarbeitsplatz CWP2 des zweiten Lotsen gespeichert ist, erkennt, dass sich durch die Umschaltung von Funkkanal U-04 in den unverschlüsselten Kommunikationsmodus P eine unzulässige Kombination von verschlüsselten und unverschlüsselten Funkstationen-Gruppen CG auf der Push-to-Talk-Taste PTT2 ergeben hat.

Um ein unbeabsichtigtes Aussenden von vertraulicher Sprache auf Funkkanal U-04 zu verhindern, entfernt im Ausführungsbeispiel die Steuer- und Verarbeitungseinheit des Lotsenarbeitsplatzes CWP2 automatisch die Funkstationen-Gruppen CG mit dem Funkkanal U-04 von der Push-to-Talk-Taste PTT2 und weist den Lotsen durch einen Warnton, der im Headset abgegeben wird, sowie durch eine visuelle Fehlermeldung auf dem Touchscreen bzw. der Eingabeeinheit 1 auf diesen Umstand hin.

Der Zustand der Funkstationen-Gruppen CG hat sich damit wie folgt verändert:

| Funkkanal | Frequenzband | Nutzung | Verschlüsselung möglich | Verschlüsselung aktiv | Push-to-Talk-Taste |
|---|---|---|---|---|---|
| V-01 | VHF | Zivil | Nein | Nein | PTT 1 |
| U-02 | UHF | Militärisch national | Ja | Ja | PTT 2 |
| U-03 | UHF | Militärisch national | Ja | Nein | PTT 1 |
| U-04 | UHF | Militärisch international | Ja | Nein | keine |

Durch diese Ausgestaltung eines erfindungsgemäßen Sprachübertragungssystems mit einer Überprüfung auf unzulässige Kombinationen von Funkstationen-Gruppen CG im verschlüsselten Kommunikationsmodus S und im unverschlüsselten Kommunikationsmodus P auf derselben Push-to-Talk-Taste ist eine zuverlässige Trennung von Funkübertragungen in Sicherheitsbereiche gewährleistet und die Lotsen werden über auftretende Veränderungen in den Sicherheitseinstellungen der aktuell genutzten Funkkanäle benachrichtigt.

Die weitere Behandlung des Fehlers kann nun manuell durch den Lotsen, beispielsweise durch eine der folgenden Maßnahmen, erfolgen:
- Zuweisung der nun unverschlüsselten Funkstationen-Gruppe CG mit dem Funkkanal U-04 auf den Push-to-Talk-Taste PTT1, wodurch die drei unverschlüsselten Funkstationen-Gruppen CG mit den Funkkanälen V-01, U-03 und U-04 über die gleiche Push-to-Talk-Taste bedient werden.
- Sofern kein Senden auf Funkkanal U-04 nötig ist, kann eine Umschaltung des Funkkanals U-04 auf reinen Empfangsbetrieb erfolgen, wofür keine Zuweisung auf eine Push-to-Talk-Taste benötigt wird.
- Umschaltung des Funkkanals U-02 auf unverschlüsselte Kommunikation bzw. den unverschlüsselten Kommunikationsmodus P und erneute Zuweisung der Funkstationen-Gruppe CG mit dem Funkkanal U-04 zur Push-to-Talk-Taste PTT2.

Während der Verschlüsselungsmodus bzw. der verschlüsselte Kommunikationsmodus S oder der unverschlüsselte Kommunikationsmodus P einer Frequenz bzw. eines Funkkanals einer Funkstationen-Gruppe CG für alle Lotsen gleich ist, kann die Zuweisung zu einer Push-to-Talk-Taste durch jeden Lotsen separat und ohne Auswirkungen auf andere Lotsen vorgenommen werden.

Dies ist operationell relevant und vorteilhaft, um eine flexible Nutzung der Funkstationen-Gruppen CG durch die Lotsen zu ermöglichen. Die Konsistenzregeln bzw. Konsistenzprüfung der Steuer- und Verarbeitungseinheit der Lotsenarbeitsplätze CWP1, CWP2 bei einem erfindungsgemäßen Sprachübertragungssystem VCS verhindert im Ausführungsbeispiel eine Zuweisung von verschlüsselten und unverschlüsselten Funkstationen-Gruppen CG auf die gleiche Push-to-Talk-Taste.

Werden nur verschlüsselte bzw. nur unverschlüsselte Funkstationen-Gruppen CG verwendet, ermöglicht das System auch eine beliebige Aufteilung der Funkstationen-Gruppen CG auf die beiden Push-to-Talk-Tasten. Da die Zuweisung der Funkstationen-Gruppen CG zu Push-to-Talk-Tasten auf dem jeweiligen Lotsenarbeitsplatz CWP1, CWP2 erfolgt und damit keine Kommunikation mit anderen Systemkomponenten nötig ist, arbeitet der Mechanismus vorteilhafterweise praktisch verzögerungsfrei und ohne Rückwirkung auf andere Teilnehmer im System.

Die Steuer- und Verarbeitungseinheit des jeweiligen Lotsenarbeitsplatzes CWP1, CWP2 kann optional auch noch weitere Konsistenzprüfungen durchführen, um zu vermeiden, dass vertrauliche Sprechfunkmeldungen an Funkstationen-Gruppen CG im unverschlüsselten Kommunikationsmodus P abgegeben werden:
So kann die Steuer- und Verarbeitungseinheit beispielsweise bei der erstmaligen Verwendung einer Funkstationen-Gruppe CG auf einem weiteren Lotsenarbeitsplatz CWP2 den aktuellen Kommunikationsmodus der Funkstationen-Gruppe CG ermitteln und dem Benutzer zur Anzeige bringen. Hierdurch ist sichergestellt, dass der neu hinzugekommene Benutzer am Lotsenarbeitsplatz CWP2 über den aktuellen Zustand aller Funkstationen-Gruppen informiert ist, bevor er etwaige Änderungen am Kommunikationsmodus vornimmt.

Weiters kann die Steuer- und Verarbeitungseinheit des jeweiligen Lotsenarbeitsplatzes CWP1, CWP2 optional nach der Zuordnung mehrerer Funkstationen-Gruppen CG zu einer jeweiligen Push-to-Talk-Taste in vorgegebenen Zeitabständen überprüfen, ob den einzelnen Funkstationen-Gruppen CG noch immer derselbe Kommunikationsmodus zugeordnet ist, oder ob sich der Kommunikationsmodus einzelner Funkstationen-Gruppen CG geändert hat. In diesem Fall beendet die Steuer- und Verarbeitungseinheit die Zuordnung der betreffenden Funkstationen-Gruppe zur jeweiligen Push-to-Talk-Taste, um zu verhindern, dass vertrauliche Sprechfunkmeldungen im unverschlüsselten Kommunikationsmodus P abgegeben werden.

Generell besteht bei der Detektion von derartigen Widersprüchen bzw. unzulässigen Kombinationen von Funkstationen-Gruppen CG im verschlüsselten und unverschlüsselten Kommunikationsmodus auf derselben Push-to-Talk-Taste durch die Steuer- und Verarbeitungseinheit die Möglichkeit, dass - wie im Ausführungsbeispiel - ein beispielsweise optischer und/oder akustischer Warnhinweis an den Lotsen an seinem Lotsenarbeitsplatz CWP1, CWP2 abgegeben wird. Dabei kann es sich um Warntöne, Lichtsignale, graphische Benutzeroberflächen mit einem Warnhinweis, die auf der Eingabeeinheit dargestellt werden, oder dergleichen handeln.

Derartige Warnhinweise können beispielsweise abgegeben werden, wenn
- bei der Zuordnung mehrerer Funkstationen-Gruppen CG zu einer jeweiligen Push-to-Talk-Taste einer der Funkstationen-Gruppen CG nicht derselbe Kommunikationsmodus zugeordnet ist,
- die Zuordnung einer Funkstationen-Gruppe zur Push-to-Talk-Taste durch die Steuer- und Verarbeitungseinheit beendet wird,
- der Kommunikationsmodus einer der am betreffenden Lotsenarbeitsplatz verwendeten Funkstationen-Gruppen CG durch den Benutzer eines weiteren, anderen Lotsenarbeitsplatzes geändert wird.

Generell kann eine erfindungsgemäße Push-to-Talk-Einheit 7 selbstverständlich auch mehr als zwei Push-to-Talk-Tasten aufweisen. Auf diese Weise können die Lotsen noch flexibler und effizienter mit verschiedenen Funkstationen-Gruppen CG kommunizieren und beispielsweise zwei Push-to-Talk-Tasten Funkstationen-Gruppen CG im verschlüsselten Kommunikationsmodus S zuweisen. Dies stellt beispielsweise sicher, dass die Abgabe vertraulicher Sprechfunkmeldungen je nach Inhalt je nach gewählter Push-to-Talk-Taste an verschiedene Funkstationen-Gruppen CG im verschlüsselten Kommunikationsmodus S vorgenommen werden kann.

Obwohl das zuvor beschriebene Ausführungsbeispiel eines erfindungsgemäßen Sprachübertragungssystems im Zusammenhang mit Luftfahrt erläutert wurde, kann ein erfindungsgemäßes Sprachübertragungssystem auch in anderen Anwendungsgebieten eingesetzt werden, in denen in rascher Abfolge mehrere Funkkanäle bedient werden müssen, wie beispielsweise im Zusammenhang mit *public safety,* insbesondere, wo Disponenten einer Notruf-Leitstelle mit Einsatzkräften, die in einem größeren geografischen Gebiet verteilt sind, über Sprechfunk kommunizieren müssen. Die Disponenten (die den Fluglotsen des obigen Beispiels entsprechen) arbeiten dabei in Notruf-Leitstellen an Arbeitsplätzen, die ähnlich wie die Lotsenarbeitsplatz CWP1, CWP2 des obigen Beispiels ausgeführt sind.

## Patentansprüche

1. Sprachübertragungssystem (VCS) umfassend
eine Mehrzahl von Sende-/Empfangsanlagen zum Senden und/oder Empfangen von Funksignalen an eine Funkstationen-Gruppe (CG) und/oder von einer Mehrzahl von Funkstationen-Gruppen (CG), wobei die Funkstationen-Gruppen (CG) jeweils eine Mehrzahl von geographisch verteilten Funkstationen (7a, 7b, 7c) umfassen und wobei Sprechfunkmeldungen jeweils auf unterschiedlichen Funkkanälen an die einzelnen Funkstationen-Gruppen (CG) sendbar und/oder von den einzelnen Funkstationen-Gruppen (CG) empfangbar sind,
- wobei die Sende-/Empfangsanlagen mit einem ersten gemeinsamen Lotsenarbeitsplatz (CWP1) verbunden sind,
- wobei der erste Lotsenarbeitsplatz (CWP1) einen Lautsprecher (2) zur Ausgabe von Sprechfunkmeldungen an einen Benutzer, ein Mikrofon (5) zur Aufnahme von, vom Benutzer abgegebenen, Sprechfunkmeldungen und eine Eingabeeinheit (1) umfasst,
- wobei über die Eingabeeinheit (1) für die einzelnen Funkstationen-Gruppen (CG) ein Empfangs-Übertragungsmodus (RX) oder ein Sende-/Empfangs-Übertragungsmodus (TX) vom Benutzer wählbar ist, und
- wobei über die Eingabeeinheit (1) für die einzelnen Funkstationen-Gruppen (CG) ein verschlüsselter Kommunikationsmodus (S) oder ein unverschlüsselter Kommunikationsmodus (P) vom Benutzer wählbar ist,
- wobei der erste Lotsenarbeitsplatz (CWP1) eine Push-to-Talk-Einheit (7) umfasst, und
- wobei der erste Lotsenarbeitsplatz (CWP1) eine Steuer- und Verarbeitungseinheit umfasst, wobei die Steuer- und Verarbeitungseinheit einen Zwischenspeicher umfasst und wobei im Zwischenspeicher die Funkkanäle der einzelnen Funkstationen-Gruppen (CG) sowie der jeweils gewählte Übertragungsmodus hinterlegt sind, und
- wobei die Push-to-Talk-Einheit (7) zumindest zwei konfigurierbare Push-to-Talk-Tasten (PTT1, PTT2) umfasst, wobei über die Eingabeeinheit (1) jeder der Push-to-Talk-Tasten (PTT1, PTT2) zumindest eine Funkstationen-Gruppe (CG) und ein Kommunikationsmodus vom Benutzer zuordenbar ist,
**dadurch gekennzeichnet,**
**dass** die Steuer- und Verarbeitungseinheit dazu ausgebildet ist, bei Zuordnung mehrerer Funkstationen-Gruppen (CG) durch den Benutzer zu einer jeweiligen Push-to-Talk-Taste (PTT1, PTT2) zu überprüfen, ob den einzelnen Funkstationen-Gruppen (CG) jeweils derselbe Kommunikationsmodus zugeordnet ist.

2. Sprachübertragungssystem (VCS) nach Anspruch 1, **dadurch gekennzeichnet, dass** die Sende-/Empfangsanlagen mit zumindest einem weiteren gemeinsamen Lotsenarbeitsplatz (CWP2) verbunden sind.

3. Sprachübertragungssystem (VCS) nach Anspruch 2, **dadurch gekennzeichnet, dass** der zumindest eine weitere Lotsenarbeitsplatz (CWP2) einen weiteren Lautsprecher zur Ausgabe von Sprechfunkmeldungen an einen Benutzer, ein weiteres Mikrofon zur Aufnahme von, vom Benutzer abgegebenen, Sprechfunkmeldungen, eine weitere Eingabeeinheit, sowie eine weitere Steuer- und Verarbeitungseinheit mit einem weiteren Zwischenspeicher umfasst,
- wobei über die weitere Eingabeeinheit für die einzelnen Funkstationen-Gruppen (CG) ein Empfangs-Übertragungsmodus (RX) oder ein Sende-/Empfangs-Übertragungsmodus (TX) vom Benutzer wählbar ist, und
- wobei über die weitere Eingabeeinheit für die einzelnen Funkstationen-Gruppen ein verschlüsselter Kommunikationsmodus (S) oder ein unverschlüsselter Kommunikationsmodus (P) vom Benutzer wählbar ist,
- wobei im weiteren Zwischenspeicher die Funkkanäle der einzelnen Funkstationen-Gruppen (CG) sowie der jeweils gewählte Übertragungsmodus hinterlegt sind, und
- wobei der weitere Lotsenarbeitsplatz (CWP2) eine weitere Push-to-Talk-Einheit umfasst, wobei die weitere Push-to-Talk-Einheit zumindest zwei konfigurierbare Push-to-Talk-Tasten umfasst, wobei über die weitere Eingabeeinheit jeder der Push-to-Talk-Tasten zumindest eine Funkstationen-Gruppe (CG) und ein Kommunikationsmodus vom Benutzer zuordenbar ist.

4. Sprachübertragungssystem (VCS) nach einem der vorangehenden Ansprüche, **dadurch gekennzeichnet, dass** die Steuer- und Verarbeitungseinheit dazu ausgebildet ist, bei Zuschaltung eines weiteren Lotsenarbeitsplatzes (CWP2) bei erstmaliger Verwendung einer jeweiligen Funkstationen-Gruppe (CG) am weiteren Lotsenarbeitsplatz (CWP2) den aktuellen Kommunikationsmodus der betreffenden Funkstationen-Gruppe (CG) zu ermitteln, wobei insbesondere vorgesehen ist, dass die Steuer- und Verarbeitungseinheit dazu ausgebildet ist, den aktuellen Kommunikationsmodus der betreffenden Funkstationen-Gruppe (CG) für den Benutzer am weiteren Lotsenarbeitsplatz (CWP2) anzuzeigen.

5. Sprachübertragungssystem (VCS) nach einem der vorangehenden Ansprüche, **dadurch gekennzeichnet, dass** die Steuer- und Verarbeitungseinheit dazu ausgebildet ist, nach der Zuordnung mehrerer Funkstationen-Gruppen (CG) zu einer jeweiligen Push-to-Talk-Taste (PTT1, PTT2) in vorgegebenen Zeitabständen, insbesondere laufend, zu überprüfen, ob den einzelnen Funkstationen-Gruppen (CG) jeweils noch derselbe Kommunikationsmodus zugeordnet ist und im Fall einer Detektion einer Veränderung des Kommunikationsmodus einer Funkstationen-Gruppe (CG), die Zuordnung der betreffenden Funkstationen-Gruppe (CG) zur jeweiligen Push-to-Talk-Taste (PTT1, PTT2) zu beenden.

6. Sprachübertragungssystem (VCS) nach einem der vorangehenden Ansprüche, **dadurch gekennzeichnet, dass** die Steuer- und Verarbeitungseinheit dazu ausgebildet ist, einen, insbesondere optischen und/oder akustischen, Warnhinweis an den Benutzer an einem Lotsenarbeitsplatz abzugeben,
- im Fall, dass bei der Zuordnung mehrerer Funkstationen-Gruppen (CG) durch einen Benutzer zu einer jeweiligen Push-to-Talk-Taste (PTT1, PTT2) einer der Funkstationen-Gruppen (CG) nicht derselbe Kommunikationsmodus zugeordnet ist und/oder
- im Fall, dass die Zuordnung einer Funkstationen-Gruppe (CG) zur Push-to-Talk-Taste (PTT1, PTT2) beendet ist und/oder
- im Fall einer Änderung des Kommunikationsmodus einer der Funkstationen-Gruppen (CG) durch den Benutzer eines weiteren Lotsenarbeitsplatzes.

7. Sprachübertragungssystem (VCS) nach einem der vorangehenden Ansprüche, **dadurch gekennzeichnet, dass** der Lautsprecher (2) und/oder das Mikrofon (5) und/oder die Push-to-Talk-Einheit (7) in und/oder an einem Headset (3) angeordnet sind.

8. Sprachübertragungssystem (VCS) nach einem der vorangehenden Ansprüche, **dadurch gekennzeichnet, dass** über die Eingabeeinheit (1) jedem der Push-to-Talk-Tasten (PTT1, PTT2) zumindest eine Funkstationen-Gruppe (CG), für die der Sende-/Empfangs-Übertragungsmodus (TX) gewählt ist, vom Benutzer zuordenbar ist.

## Claims

1. Voice communication system (VCS) comprising
a plurality of transmitting/receiving systems for transmitting and/or receiving radio signals to a radio station group (CG) and/or from a plurality of radio station groups (CG), wherein the radio station groups (CG) each comprise a plurality of geographically distributed radio stations (7a, 7b, 7c) and wherein voice radio messages are each transmitable on different radio channels to the individual radio station groups (CG) and/or receivable by the individual radio station groups (CG),
- wherein the transmitting/receiving systems are connected to a first common controller workstation (CWP1),
- wherein the first controller workstation (CWP1) comprises a loudspeaker (2) for outputting voice radio messages to a user, a microphone (5) for receiving voice radio messages emitted by the user, and an input unit (1),
- wherein via the input unit (1) a receive transmission mode (RX) or a transmit/receive transmission mode (TX) is selectable by the user for the individual radio station groups (CG), and
- wherein via the input unit (1) an encrypted communication mode (S) or an unencrypted communication mode (P) is selectable by the user for the individual radio station groups (CG),
- wherein the first controller workstation (CWP1) comprises a push-to-talk unit (7), and
- wherein the first controller workstation (CWP1) comprises a control and processing unit, wherein the control and processing unit comprises a buffer memory and wherein the radio channels of the individual radio station groups (CG) as well as the respectively selected transmission mode are stored in the buffer memory, and
- wherein the push-to-talk unit (7) comprises at least two configurable push-to-talk buttons (PTT1, PTT2), wherein via the input unit (1) each of the push-to-talk buttons (PTT1, PTT2) is assignable by the user to at least one radio station group (CG) and one communication mode,
**characterized in that**
the control and processing unit is designed to check whether the same communication mode is assigned to the individual radio station groups (CG) when several radio station groups (CG) are assigned by the user to a respective push-to-talk button (PTT1, PTT2).

2. Voice communication system (VCS) according to claim 1, **characterized in that** the transmitting/receiving systems are connected to at least one further common controller workstation (CWP2).

3. Voice communication system (VCS) according to claim 2, **characterized in that** the at least one further controller workstation (CWP2) comprises a further loudspeaker for outputting voice radio messages to a user, a further microphone for receiving voice radio messages emitted by the user, a further input unit, and a further control and processing unit with a further buffer memory,
- wherein via the further input unit a receive transmission mode (RX) or a transmit/receive transmission mode (TX) is selectable by the user for the individual radio station groups (CG), and
- wherein via the further input unit an encrypted communication mode (S) or an unencrypted communication mode (P) is selectable by the user for the individual radio station groups,
- wherein the radio channels of the individual radio station groups (CG) as well as the respectively selected transmission mode are stored in the further buffer memory, and
- wherein the further controller workstation (CWP2) comprises a further push-to-talk unit, wherein the further push-to-talk unit comprises at least two configurable push-to-talk buttons, wherein via the further input unit each of the push-to-talk buttons is assignable by the user to at least one radio station group (CG) and one communication mode.

4. Voice communication system (VCS) according to any one of the preceding claims, **characterized in that** the control and processing unit is designed to determine the current communication mode of the respective radio station group (CG) when a further controller workstation (CWP2) is connected when a respective radio station group (CG) is used for the first time at the further controller workstation (CWP2), wherein it is in particular provided that the control and processing unit is designed to display the current communication mode of the respective radio station group (CG) to the user at the further controller workstation (CWP2).

5. Voice communication system (VCS) according to any one of the preceding claims, **characterized in that** the control and processing unit is designed to check at specified intervals after the assignment of several radio station groups (CG) to a respective push-to-talk button (PTT1, PTT2) whether the same communication mode is still assigned to the individual radio station groups (CG) and, in the event of detecting a change in the communication mode of a radio station group (CG), to terminate the assignment of the respective radio station group (CG) to the respective push-to-talk button (PTT1, PTT2).

6. Voice communication system (VCS) according to any one of the preceding claims, **characterized in that** the control and processing unit is designed to output a warning, in particular a visual and/or acoustic warning, to the user at a controller workstation
- in the event that when several radio station groups (CG) are assigned by a user to a respective push-to-talk button (PTT1, PTT2), one of the radio station groups (CG) is not assigned the same communication mode, and/or
- in the event that the assignment of a radio station group (CG) to the push-to-talk button (PTT1, PTT2) has ended, and/or
- in the event of a change in the communication mode of one of the radio station groups (CG) by the user of a further controller workstation.

7. Voice communication system (VCS) according to any one of the preceding claims, **characterized in that** the loudspeaker (2) and/or the microphone (5) and/or the push-to-talk unit (7) are arranged in and/or on a headset (3).

8. Voice communication system (VCS) according to any one of the preceding claims, **characterized in that** via the input unit (1) each of the push-to-talk buttons (PTT1, PTT2) is assignable by the user to at least one radio station group (CG) for which the transmit/receive transmission mode (TX) is selected.

## Revendications

1. Système de transmission vocale (VCS) comprenant
une pluralité d'installations d'émission/réception pour l'émission et/ou la réception de signaux radio vers un groupe de stations radio (CG) et/ou à partir d'une pluralité de groupes de stations radio (CG), dans lequel les groupes de stations radio (CG) comprennent respectivement une pluralité de stations radio (7a, 7b, 7c) réparties géographiquement et dans lequel des messages radio vocaux peuvent respectivement être émis sur des canaux radio différents vers les groupes de stations radio (CG) individuels et/ou être reçus par les groupes de stations radio (CG) individuels,
- dans lequel les installations d'émission/réception sont connectées à un premier poste de travail de pilotage commun (CWP1),
- dans lequel le premier poste de travail de pilotage (CWP1) comprend un haut-parleur (2) pour l'émission de messages radio vocaux à un utilisateur, un microphone (5) pour l'enregistrement de messages radio vocaux émis par l'utilisateur et une unité d'entrée (1),
- dans lequel un mode de transmission de réception (RX) ou un mode de transmission d'émission/réception (TX) peut être sélectionné par l'utilisateur pour les groupes de stations radio (CG) individuels par l'intermédiaire de l'unité d'entrée (1), et
- dans lequel un mode de communication chiffré (S) ou un mode de communication non chiffré (P) peut être sélectionné par l'utilisateur pour les groupes de stations radio (CG) individuels par l'intermédiaire de l'unité d'entrée (1),
- dans lequel le premier poste de travail de pilotage (CWP1) comprend une unité Push-to-Talk (7), et
- dans lequel le premier poste de travail de pilotage (CWP1) comprend une unité de commande et de traitement, dans lequel l'unité de commande et de traitement comprend une mémoire intermédiaire et dans lequel les canaux radio des groupes de stations radio (CG) individuels ainsi que le mode de transmission respectivement sélectionné sont enregistrés dans la mémoire intermédiaire, et
- dans lequel l'unité Push-to-Talk (7) comprend au moins deux touches Push-to-Talk (PTT1, PTT2) configurables, dans lequel au moins un groupe de stations radio (CG) et un mode de communication peuvent être attribués par l'utilisateur à chacune des touches Push-to-Talk (PTT1, PTT2) par l'intermédiaire de l'unité d'entrée (1),
**caractérisé en ce que**
l'unité de commande et de traitement est conçue pour vérifier, lors de l'attribution de plusieurs groupes de stations radio (CG) par l'utilisateur à une touche Push-to-Talk (PTT1, PTT2) respective, si le même mode de communication est respectivement attribué aux groupes de stations radio (CG) individuels.

2. Système de transmission vocale (VCS) selon la revendication 1, **caractérisé en ce que** les installations d'émission/réception sont connectées à au moins un poste de travail de pilotage commun (CWP2) supplémentaire.

3. Système de transmission vocale (VCS) selon la revendication 2, **caractérisé en ce que** le au moins un poste de travail de pilotage (CWP2) supplémentaire comprend un haut-parleur supplémentaire pour l'émission de messages radio vocaux à un utilisateur, un microphone supplémentaire pour l'enregistrement de messages radio vocaux émis par l'utilisateur, une unité d'entrée supplémentaire, ainsi qu'une unité de commande et de traitement supplémentaire avec une mémoire intermédiaire supplémentaire,
- dans lequel un mode de transmission de réception (RX) ou un mode de transmission d'émission/réception (TX) peut être sélectionné par l'utilisateur pour les groupes de stations radio (CG) individuels par l'intermédiaire de l'unité d'entrée supplémentaire, et
- dans lequel un mode de communication chiffré (S) ou un mode de communication non chiffré (P) peut être sélectionné par l'utilisateur pour les groupes de stations radio individuels par l'intermédiaire de l'unité d'entrée supplémentaire,
- dans lequel les canaux radio des groupes de stations radio (CG) individuels ainsi que le mode de transmission respectivement sélectionné sont enregistrés dans la mémoire intermédiaire supplémentaire, et
- dans lequel le poste de travail de pilotage (CWP2) supplémentaire comprend une unité Push-to-Talk supplémentaire, dans lequel l'unité Push-to-Talk supplémentaire comprend au moins deux touches Push-to-Talk configurables, dans lequel au moins un groupe de stations radio (CG) et un mode de communication peuvent être attribués par l'utilisateur à chacune des touches Push-to-Talk par l'intermédiaire de l'unité d'entrée supplémentaire.

4. Système de transmission vocale (VCS) selon l'une quelconque des revendications précédentes, **caractérisé en ce que** l'unité de commande et de traitement est conçue pour déterminer le mode de communication actuel du groupe de stations radio (CG) concerné lors du branchement d'un poste de travail de pilotage (CWP2) supplémentaire lors de la première utilisation d'un groupe de stations radio (CG) respectif sur le poste de travail de pilotage (CWP2) supplémentaire, dans lequel il est en particulier prévu que l'unité de commande et de traitement est conçue pour afficher le mode de communication actuel du groupe de stations radio (CG) concerné pour l'utilisateur au poste de travail de pilotage (CWP2) supplémentaire.

5. Système de transmission vocale (VCS) selon l'une quelconque des revendications précédentes, **caractérisé en ce que** l'unité de commande et de traitement est conçue pour, après l'attribution de plusieurs groupes de stations radio (CG) à une touche Push-to-Talk (PTT1, PTT2) respective, vérifier à intervalles prédéfinis, en particulier en continu, si le même mode de communication est respectivement encore attribué aux groupes de stations radio (CG) individuels et, dans le cas d'une détection d'une modification du mode de communication d'un groupe de stations radio (CG), terminer l'attribution du groupe de stations radio (CG) concerné à la touche Push-to-Talk (PTT1, PTT2) respective.

6. Système de transmission vocale (VCS) selon l'une quelconque des revendications précédentes, **caractérisé en ce que** l'unité de commande et de traitement est conçue pour émettre un avertissement, en particulier optique et/ou acoustique, à l'utilisateur à un poste de travail de pilotage,
- dans le cas où, lors de l'attribution de plusieurs groupes de stations radio (CG) par un utilisateur à une touche Push-to-Talk (PTT1, PTT2) respective, le même mode de communication n'est pas attribué à un des groupes de stations radio (CG) et/ou
- dans le cas où l'attribution d'un groupe de stations radio (CG) à la touche Push-to-Talk (PTT1, PTT2) est terminée et/ou
- dans le cas d'une modification du mode de communication d'un des groupes de stations radio (CG) par l'utilisateur d'un poste de travail de pilotage supplémentaire.

7. Système de communication vocale (VCS) selon l'une quelconque des revendications précédentes, **caractérisé en ce que** le haut-parleur (2) et/ou le microphone (5) et/ou l'unité Push-to-Talk (7) sont disposés dans et/ou sur un casque (3).

8. Système de transmission vocale (VCS) selon l'une quelconque des revendications précédentes, **caractérisé en ce qu'**au moins un groupe de stations radio (CG), pour lequel le mode de transmission d'émission/réception (TX) est sélectionné, peut être attribué par l'utilisateur à chacune des touches Push-to-Talk (PTT1, PTT2) par l'intermédiaire de l'unité d'entrée (1).
